## Europäisches Patentamt
## European Patent Office
## Office européen des brevets

(11) Veröffentlichungsnummer: **0 012 307**
**A2**

(12) **EUROPÄISCHE PATENTANMELDUNG**

(21) Anmeldenummer: **79104829.1**

(22) Anmeldetag: **01.12.79**

(51) Int. Cl.³: **F 23 H 13/08,** F 23 G 5/00, C 10 J 3/42

(30) Priorität: **07.12.78 DE 2852879**

(43) Veröffentlichungstag der Anmeldung: **25.06.80**
**Patentblatt 80/13**

(84) Benannte Vertragsstaaten: **AT BE CH FR GB IT LU NL SE**

(71) Anmelder: **Saarberg-Fernwärme GmbH, Sulzbachstrasse 26, D-6600 Saarbrücken (DE)**

(72) Erfinder: **Besch, Helmut, Dipl.-Ing., Werbelner Strasse 51, D-6622 Schaffhausen (DE)**
Erfinder: **Löw, Erwin, Strassersberg 7a, D-6625 Püttlingen (DE)**

(74) Vertreter: **Bernhardt, Winfried, Dr.-Ing., Kobenhüttenweg 43, D-6600 Saarbrücken (DE)**

(54) **Drehrost für einen Vergasungs- und/oder Verbrennungs-Reaktor.**

(57) Ein Drehrost (1) für einen Vergasungs- und/oder Verbrennungs-Reaktor (2) ist mit Rührarmen o. dgl. (31) versehen, die in das über dem Drehrost befindliche Materialbett greifen und es durchmischen. Der Drehrost (1) kann in zwei unabhängig voneinander antreibbare, konzentrische Teile geteilt sein, von denen der äußere Teil (11) im Zusammenwirken mit einem Abstreifer (18) Austragsorgan ist und eine dafür geeignete Drehzahl hat und der innere Teil (23) eine für die Durchmischung des Materialbetts geeignete Drehzahl hat.

EP 0 012 307 A2

- 1 -

## Drehrost für einen Vergasungs- und/oder Verbrennungs-Reaktor.

Die Erfindung betrifft einen Drehrost für einen Vergasungs- und/oder Verbrennungs-Reaktor, insbesondere **einen** Abfall vergasenden und/oder verbrennenden Reaktor.

Der den Einsatzstoff, z.B. Abfall vergasende und/oder verbrennende Reaktor wird in der Regel den Aufgaben der Abfallbeseitigung, Gaserzeugung und/oder Wärmeerzeugung dienen, wobei für alle diese Zwecke auch zusätzliche brennbare Stoffe, etwa Kohle, hinzugemischt werden können; in Betracht kommt jedoch auch die Abfallvernichtung allein, etwa bei zu geringer nicht verwertungsfähiger Wärmeausbeute. Der Vergasungs- und/oder Verbrennungs-Reaktor kann als solcher auch der Gas- und/oder Wärmeerzeugung allein dienen.

Der Drehrost bildet darin den Boden für das Materialbett; "Rost" als ofentechnische Bezeichnung ist hier in diesem Sinne zu verstehen und nicht speziell auf einen Gitterrost o. dgl. beschränkt.

In erster Linie ist an einen Schachtofen gedacht,

- 2 -

dem das Ausgangsmaterial oben aufgegeben wird und aus dem unten die nach der Vergasung und/oder Verbrennung verbleibende Asche ausgetragen wird.

Der Erfindung liegt die Aufgabe zugrunde, den Ausbrand des Materials zu verbessern, d.h. den Rest an unvergastem bzw. unverbranntem Material zu verringern, der sich noch in der Asche findet.

Gemäß der Erfindung erfüllt diesen Zweck ein Drehrost, der als Rührwerkzeug für das über ihm befindliche Materialbett ausgebildet ist.

Das Durchrühren des Materialbetts durch den Drehrost zerstört ständig die Strömungskanäle der Gase im Materialbett, die sich sonst bilden, und führt damit das Oxydationsmittel und/oder die Vergasungsmittel immer wieder an andere Materialstellen heran; dies in einem Maße, das die beim Nachrutschen des Materials auftretende ähnliche Wirkung um ein Vielfaches übersteigt. Zugleich wird Brückbildung des Materials über dem Rost verhindert.

Die dafür erforderlichen Mittel sind denkbar geringfügig. Es braucht nur der ohnehin sich drehende Drehrost mit mindestens einem in das Materialbett hineinragenden Mitnehmer versehen zu werden, vorzugsweise Rührarmen, Rühraufsätzen, Mischleisten, Rührblättern o. dgl..

Soweit erforderlich, kann der bzw. können die Mitnehmer gekühlt sein, vorzugsweise durch Hindurch-

- 3 -

führung des Oxydationsmittels und/oder der Vergasungsmittel.

Bevorzugt ist der Drehrost im ganzen kegelförmig
ausgebildet, jedoch vorzugsweise mit einer außermittigen Spitze. Ein kegelförmiger Rost greift
schon selbst tiefer in das Material hinein, so
daß die Mitnehmer sich noch besser auswirken
können. Die außermittige Spitze verhindert einen
Totraum ohne Rührung auf der Achse über dem Drehrost.

Nach einer bevorzugten Ausgestaltung der Erfindung ist der Drehrost zugleich Austragsorgan des
Reaktors, vorzugsweise mit einem ringförmigen,
in der Mitte hochgewölbten Teller, für den
mindestens eine Austragsöffnung und ein Abstreifer
vorgesehen sind.

Als eine besonders vorteilhafte Weiterbildung
der Erfindung wird vorgeschlagen, daß der Drehrost, der zugleich Austragsorgan des Reaktors
ist, in zwei unabhängig voneinander antreibbare,
vorzugsweise konzentrische, Teile geteilt ist,
von denen der äußere Teil, vorzugsweise in Form
des genannten Tellers, Austragsorgan ist, oder
daß ein unabhängig von dem Drehrost antreibbares
zusätzliches Rührwerkzeug vorgesehen ist, vorzugsweise auf einer axial durch den Drehrost hindurchgeführten Welle.
Mit diesen Maßnahmen ist es möglich, sowohl das
Rühren als auch das Austragen nach Bedarf zu
steuern.

- 4 -

Zur Steuerung des Austragens unabhängig vom Rühren kann auch ein unabhängig von dem Drehrost antreibbares Austragsorgan vorgesehen sein, z.B. ein an einer zur Drehrostwelle koaxialen Hohlwelle sitzender Abstreifer über einem an der Reaktorwand befestigten, ringförmigen, am Rand hochgewölbten Teller.

Überhaupt sind die Möglichkeiten zur Gestaltung des Austrags vielfältig. Zum Beispiel ist auch ein abdichtender Naßaustrag mit einer ringförmigen Wassertasse möglich.

In der Regel wird der innere, rührende Teil des Drehrosts gegenüber dem äusseren, austragenden Teil bzw. wird das Rührwerkzeug gegenüber dem austragenden Drehrost bzw. wird der rührende Drehrost gegenüber dem Austragsorgan mit größerer Geschwindigkeit antreibbar sein, vorzugsweise mit 1 bis 30 $\text{min}^{-1}$ gegenüber 0,1 bis 5 $\text{min}^{-1}$.

Die beiden betreffenden Umdrehungen können auch umgekehrten Drehsinn haben. Die Gegenläufigkeit verstärkt die Rührung und die Zerkleinerung eventuell zusammengebackenen Materials.

In weiterer Ausgestaltung der Erfindung können Auslässe für Oxydationsmittel und/oder Vergasungsmittel vorgesehen werden, die in verschiedene Sektoren des Ofenquerschnitts gerichtet und verschieden steuerbar sind.
Mit einer solchen in der Richtung wie auch in der Menge und/oder Intensität veränderlichen Steuerung kann im Sinne der erfindungsgemäß bewirkten Vergleichmäßigung des Materialbetts einseitigen Durchbrennern o. dgl. entgegengewirkt werden.

Die Auslässe können mindestens teilweise an einem aus dem Drehrost herausragenden Ende eines zentralen Zuführungsrohrs angeordnet sein und/oder mindestens teilweise unter dem Drehrost angeordnet sein, der Durchlässe aufweist.

Weitere Maßnahmen, die zur vorteilhaften Ausgestaltung der Erfindung dienen können, sind in der folgenden Beschreibung von Ausführungsbeispielen der Erfindung beschrieben und/oder in den Zeichnungen dargestellt.

Die Zeichnungen geben zwei Ausführungsbeispiele der Erfindung wieder.

Fig. 1 zeigt einen senkrechten Längsschnitt durch den unteren Teil eines Vergasungs-Reaktors mit einem Drehrost nach der Erfindung.

Fig. 2 zeigt einen senkrechten Längsschnitt durch den unteren Teil eines Vergasungs-Reaktors mit einem anderen Drehrost nach der Erfindung.

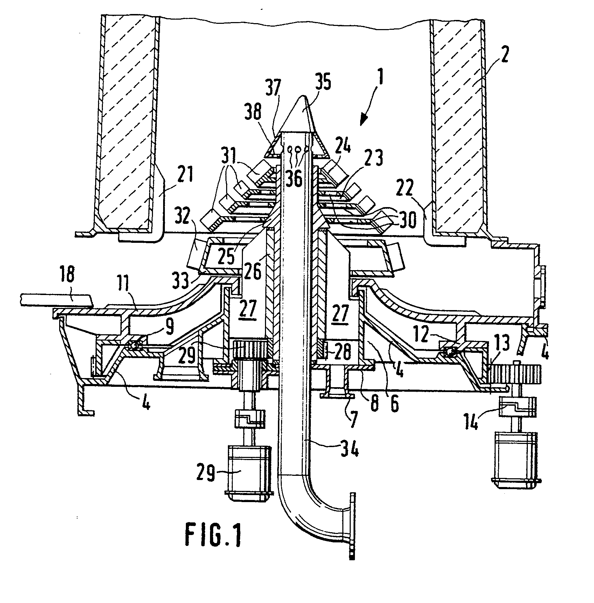

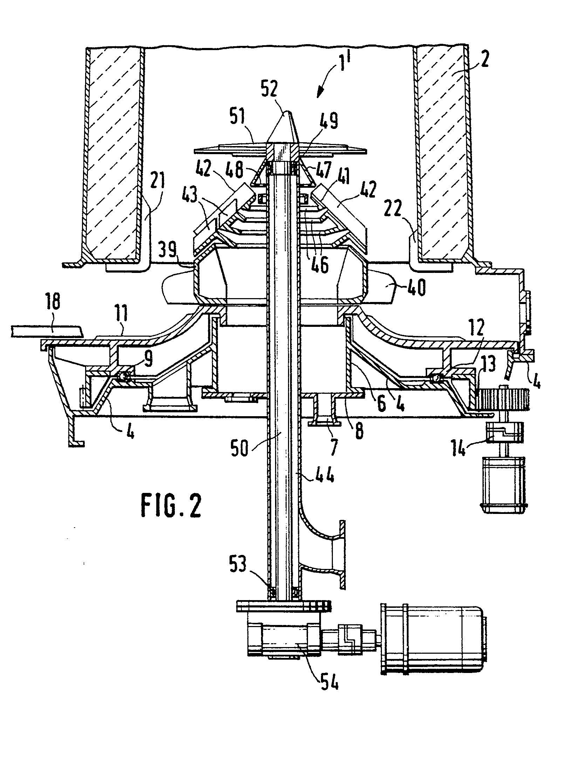

Ein Drehrost 1 (Fig. 1) bzw. 1' (Fig. 2) bildet den Boden eines Schachtofens 2, der mit einer Ausbauchung um den Außenumfang des Drehrosts herum gewölbt sein kann. Der Schachtofen ist auf einem Fundament abgestützt.

Der Drehrost 1 bzw. 1' ist mit einem Unterbau 4 versehen. Der Unterbau 4 ist innen als ein Hohlzylinder 6 ausgebildet, der unten durch einen mit einem Gaseinlaß 7 versehenen Deckel 8 verschlossen ist. Konzentrisch mit dem Hohlzylinder 6 ist auf dem Unterbau ein Rollenkranz 9 angeordnet.

Auf dem Rollenkranz 9 ist, axial sowie radial, ein ringförmiger Drehteller 11 gelagert, der den untersten und äußersten drehenden Teil des Drehrosts 1 bzw. 1' darstellt. Ein ringförmiges Basisteil 12 des Drehtellers 11 dient der Auflage auf dem Rollenkranz 9 und ist außen mit einem Zahnkranz 13 versehen, an dem ein Antrieb 14 angreift.

An mindestens einer Stelle ist über dem Drehteller 11 ein gegen die Radialrichtung angestellter Abstreifer 18 angeordnet, bei dem eine nicht gezeichnete Schleuse aus dem Drehrostraum herausführt. Schließlich ist das untere Ende des zylindrischen Ofenschachts mit Brechleisten 21 und 22 besetzt.

So weit stimmen die Anlagen gemäß Fig. 1 und 2 überein.

Der in Fig. 1 gezeigte Drehrost 1 ist zweiteilig. Er weist über dem Drehteller 11 einen weiteren drehbaren Rostkörper 23 auf, der aus mehreren an einer Hülse 24 übereinander angeordneten Scheiben unterschiedlichen Durchmessers im ganzen kegelförmig gestaltet ist. Die Hülse 24 sitzt, drehbar und mit einer Schulter 25 darauf abgestützt, in einer Lagerhülse 26, die konzentrisch in dem Hohlzylinder 6 angeordnet und durch Rippen 27 speichenförmig mit diesem verbunden ist. Das untere Ende der Hülse 24 ragt aus der Lagerhülse 26 heraus und ist hier mit einem Zahnkranz 28 versehen. In diesen greift ein an dem Deckel 8 angebrachter Antrieb 29 ein.

Die Scheiben, aus denen sich der drehbare Rostkörper 23 zusammensetzt, haben innen große Ausschnitte 30, durch die ein am Gaseinlaß 7 eintretendes und in dem Hohlzylinder 6 aufsteigendes Gas hindurchströmen und dann zwischen den Rändern der Scheiben heraustreten kann. Bei diesem Gas kann es sich um ein Vergasungsmittel, auch ein Recycling-Gas, handeln, oder um ein Oxydationsmittel.

Für die Aufgabe in verschiedene Sektoren des Ofenquerschnitts durch den Rostkörper 23 und 41 und/ oder die Haube 37 und 47 kann beispielsweise das Rohr 34 und 44 in mehrere Segmente eingeteilt sein, durch die das Oxydationsmittel und/oder die Vergasungsmittel steuerbar eingegeben werden können.

Die in die Kegelmantelfläche des Rostkörpers 23 gewinkelten Ränder der genannten Scheiben sind mit Rührblättern 31 besetzt.

Unterhalb des kegelförmigen, drehbaren Rostkörpers 23 ist mit dem Drehteller 11 ein mit Brechplatten 32 besetzter Brechkranz 33 verbunden.

Durch die Hülse 24 hindurch ragt ein feststehendes Rohr 34, das über dem drehbaren Rostkörper 23 mit einer asymmetrischen Kappe 35 endet und da-

- 8 -

runter eine Reihe von Austrittslöchern 36 aufweist. Diese führen unter eine kegelförmige Haube 37, aus der eine Reihe von Austrittslöchern 38 nach unten herausführt. Hier hindurch werden das Oxydationsmittel und/oder die Vergasungsmittel zentral zugeführt.

Der in Fig. 2 gezeigte Drehrost 1' ist einteilig. Hier ist an die Stelle des Brechkranzes 33 ein etwas anders gestalteter, höherer Brechkranz 39 mit Brechplatten 40 getreten, und an die Stelle des selbständig drehbaren Rostkörpers 23 ein über den Brechkranz 39 starr mit dem Drehteller 11 verbundener Rostkörper 41. Der Rostkörper 41 ist wiederum aus mehreren übereinander angeordneten ringförmigen Elementen von unterschiedlichem Durchmesser im ganzen kegelförmig gestaltet. Die ringförmigen Elemente können nicht nur von innen, sondern auch von außen zusammengehalten werden, und zwar durch auf Fallinien der Kegelmantelfläche angeordneten Rührleisten 42. Zusätzlich können, wie in Fig. 2 links zu erkennen, einzelne Rührblätter 43 auf den in die Kegelmantelfläche gewinkelten Außenseiten der ringförmigen Elemente angebracht sein. Auch hier können durch den Gaseinlaß 7 eintretende Gase nach oben unter den Rostkörper 41 strömen und zwischen dessen ringförmigen Elementen austreten.

Ein zentrales, Oxydationsmittel und/oder Vergasungsmittel zuführendes Rohr, mit 44 bezeichnet, ist auch bei dieser Ausführungsform vorhanden und über dem Rostkörper 41 mit einer Reihe

- 9 -

von Austrittslöchern 46 versehen, die unter einer Haube 47 mit Austrittslöchern 48 ausmünden. Das Rohr 44 ist jedoch oben abgeschlossen durch ein Lager 49 für eine Welle 50, die durch das Rohr 44 hindurchgeführt ist und über dem oberen Rohrende ein Rührwerkzeug 51 mit einer asymmetrischen Spitze 52 trägt.
Am unteren, an einem Lager 53 aus dem Rohr 44 austretenden Ende der Welle 50 greift ein Antrieb 54 an.

Beide Ausführungsformen 1 bzw. 1' des Drehrosts versetzen das über im befindliche Materialbett mit ihren Rührblättern 31 bzw. Rührblättern 43 und Rührleisten 42 in eine starke, kraftschlüssige Drehung und mischen es. Die in ihrer Anordnung an sich bekannten Brechplatten 32 bzw. 40 bilden demgegenüber zusammen mit den an der Ofenwand angebrachten Brechleisten 21 und 22 einen Mahlspalt, der das Material so weit zerkleinert, daß es darunter über den Drehteller 11 ungehindert abfließen kann. Am Abstreifer 18 wird das Material von dem Drehteller 11 herunter nach außen gezwungen und durch die erwähnte Schleuse ausgetragen.

Die Rührleistung kann gesteuert werden durch den Antrieb 29 des unabhängig drehenden Rostkörpers 23 bzw. den Antrieb 54 des zusätzlichen Rührers 51. Der Austrag kann gesteuert werden durch den Antrieb 14.

Der Erfindungsgedanke beschränkt sich nicht auf die dargestellten Ausführungsbeispiele, sondern umfaßt

- 10 -

auch Drehroste für andere Reaktoren, beispielsweise Entgasungs-Reaktoren. Denkbar ist auch,
weitere vergas- oder verbrennbare Stoffe mit einem
gewissen Ascheanteil, z.B. Kohle, Holz, Mist, Stroh,
Kaffeeschalen oder andere Einsatzstoffe allein nach
der Erfindung zu behandeln.
Des weiteren ist es denkbar, daß die zentrale Aufgabevorrichtung für Oxydationsmittel und/oder für
die Vergasungsmittel ebenfalls drehbar ausgeführt
wird.
Auch kann an eine Verstellbarkeit der Rührblätter
gedacht werden.

0012307

- 1 -

Patentansprüche:

1. Drehrost für einen Vergasungs- und/oder Verbrennungs-Reaktor, insbesondere einen Abfall vergasenden und/oder verbrennenden Reaktor, dadurch gekennzeichnet, daß er als Rührwerkzeug (1;1') für das über ihm befindliche Materialbett ausgebildet ist.

2. Drehrost nach Anspruch 1, dadurch gekennzeichnet, daß er mit mindestens einem in das Materialbett hineinragenden Mitnehmer (31;42;43) versehen ist, vorzugsweise Rührarmen, Rührfingern, Rühraufsätzen, Mischleisten (42), Rührblättern (31; 43) o. dgl..

3. Drehrost nach Anspruch 1 oder 2, dadurch gekennzeichnet, daß der bzw. die Mitnehmer gekühlt ist bzw. sind, vorzugsweise durch Hindurchführung des Oxydationsmittels und/oder der Vergasungsmittel.

4. Drehrost nach einem der Ansprüche 1 bis 3, dadurch gekennzeichnet, daß er im ganzen kegelförmig ausgebildet ist, jedoch vorzugsweise mit einer außermittigen Spitze (35;52).

5. Drehrost nach einem der Ansprüche 1 bis 4, dadurch gekennzeichnet, daß er zugleich Austragsorgan des Reaktors ist, vorzugsweise mit einem ringförmigen, in der Mitte

- 2 -

hochgewölbten Teller (11), für den mindestens
eine Austragsöffnung und ein Abstreifer (18)
vorgesehen sind.

6. Drehrost nach Anspruch 5,
dadurch gekennzeichnet,
daß er in zwei unabhängig voneinander antreibbare, vorzugsweise konzentrische, Teile (11;23)
geteilt ist, von denen der äußere Teil, vorzugsweise in Form des genannten Tellers (11), Austragsorgan ist, oder daß ein unabhängig von ihm
antreibbares zusätzliches Rührwerkzeug (51) vorgesehen ist, vorzugsweise auf einer axial durch
den Drehrost (1') hindurchgeführten Welle (50).

7. Drehrost nach einem der Ansprüche 1 bis 4,
dadurch gekennzeichnet,
daß ein unabhängig von ihm antreibbares Austragsorgan vorgesehen ist, vorzugsweise ein an einer
zur Drehrostwelle koaxialen Hohlwelle sitzender
Abstreifer über einem an der Reaktorwand befestigten, ringförmigen, am Rand hochgewölbten
Teller.

8. Drehrost nach Anspruch 6 oder 7,
dadurch gekennzeichnet,
daß der innere, rührende Teil (23) des Drehrosts
(1) gegenüber dem äußeren, austragenden Teil (11)
bzw. daß das Rührwerkzeug (51) gegenüber dem austragenden Drehrost (11, 39,41) bzw. daß der
rührende Drehrost gegenüber dem Austragsorgan mit
größerer Geschwindigkeit antreibbar ist, vorzugsweise mit 1 bis 30 min$^{-1}$ gegenüber 0,1 bis 5 min$^{-1}$,

- 3 -

und/oder mit umgekehrtem Drehsinn antreibbar
ist.

9. Drehrost nach einem der Ansprüche 1 bis 8,
gekennzeichnet durch Auslässe für Oxydationsmittel und/oder Vergasungsmittel, die in verschiedene Sektoren des Ofenquerschnitts gerichtet und verschieden steuerbar sind.

10. Drehrost nach Anspruch 9,
dadurch gekennzeichnet,
daß die Auslässe mindestens teilweise an einem
aus dem Drehrost herausragenden Ende eines
zentralen Zuführungsrohrs angeordnet sind und/
oder mindestens teilweise unter dem Drehrost
angeordnet sind, der Durchlässe aufweist.

FIG.1

FIG.2